# EUROPÄISCHE PATENTSCHRIFT

(11) **EP 1 050 662 B1**
(45) Veröffentlichungstag und Bekanntmachung des Hinweises auf die Patenterteilung: **12.02.2003**
(21) Anmeldenummer: 00117687.4
(22) Anmeldetag: 25.11.1998
(51) Int. Cl.: E21B 10/44

(54) **Gesteinsbohrwerkzeug**
Rock drilling tool
Outil de forage pour roche

(30) Priorität: 04.12.1997 DE 19753731
(43) Veröffentlichungstag der Anmeldung: 08.11.2000
(62) Teilanmeldung aus: 98963379.7
(73) Patentinhaber: Hawera Probst GmbH, 88212 Ravensburg (DE)
(72) Erfinder: Fuss, Mathias, 88250 Weingarten (DE); Wagegg, Thomas, 3924 St. Niklaus / Wallis (CH); Moser, Bernhard, 88361 Altshausen (DE)
(74) Vertreter: Patentanwälte Eisele, Otten & Roth

(56) Entgegenhaltungen:
- DE-A- 3 020 948
- DE-B- 2 013 328
- FR-A- 1 595 690
- US-A- 4 579 180

## Beschreibung

Die Erfindung betrifft ein Bohrwerkzeug insbesondere ein Gesteinsbohrwerkzeug nach dem Oberbegriff des Anspruchs 1.

### Stand der Technik:

Gesteinsbohrer bestehen aus einem, meist mit einer Hartmetall-Schneidplatte versehenen Bohrerkopf, einer sich hieran anschließenden ein- oder mehrgängigen spiralförmigen Förderwendel sowie einem nachfolgenden Einspannschaft zur Befestigung in einer Antriebsmaschine. Die Förderwendel hat bei Gesteinsbohrern die Hauptaufgabe, das durch die Hartmetallschneide gelöste Material, d. h. das Bohrmehl oder Bohrklein, aus dem Bohrloch herauszufördern. Dabei spielt die Größe der Bohrmehlnut, d. h. der freie Förderquerschnitt, für die Leistungsfähigkeit des Bohrers eine entscheidende Rolle, d. h. ein guter Bohrmehltransport gewährleistet einen guten Vorschub und verhindert Rattermarken im Bohrloch sowie eine Beschädigung des Bohrers durch Verklemmen, Überhitzen oder dergleichen. Auch die Standzeiten eines Bohrwerkzeugs werden durch die guten Fördereigenschaften der Bohrmehlnut beeinflußt.

Die Förderwendel hat darüber hinaus auch Führungseigenschaften des Bohrwerkzeugs im Bohrloch zu erfüllen.

Die wendelförmige Abfuhrnut für Bohrmehl einer ein- oder mehrgängigen Förderwendel wird beidseitig von ebenfalls wendelförmig verlaufenden Stegen begrenzt. Dabei wird eine in Transportrichtung des Bohrmehls, d. h. in Richtung Einspannschaft, weisende Tragfläche oder Transportfläche für das Bohrmehl durch die Stege gebildet. Die Umfangsfläche oder Mantelfläche eines Stegs bildet die sogenannte Rückenfläche mit einer bestimmten Rückenbreite des Stegs. Je breiter diese Rückenfläche ausgeführt ist, um so besser sind die Führungseigenschaften des Bohrwerkzeugs im Bohrloch. Nachteilig hieran ist jedoch die vergrößerte Reibung im Bohrloch und das verkleinerte Nutenvolumen zum Abtransport des Bohrmehls. Es müssen demnach Kompromisse zwischen Breite der Rückenfläche der Stege und des daraus resultierenden Nutenvolumens einerseits und den geforderten Führungseigenschaften andererseits getroffen werden.

Aus der DE-AS 20 13 328 ist der prinzipielle Aufbau einer solchen zweigängigen Förderwendel in den dortigen Figuren dargestellt.

Es gibt eine Reihe von Vorschlägen, die Fördereigenschaften des Bohrmehls in den Bohrmehlnuten zu verbessern. Beispielsweise ist gemäß der EP 0 126 409 B2 vorgesehen, die Steigungshöhe der Förderwendel in Richtung Einspannende zu vergrößern, um so im Bereich des Bohrerkopfes eine erhöhte Anzahl von Stegflächen zur Verbesserung der Führungseigenschaften zur Verfügung zu stellen. Hierdurch vergrößert sich auch die Bohrmehlnut in Richtung Einspannende, d. h. in Förderrichtung des Bohrmehls, so daß es nicht zu einem Verklemmen des Bohrers kommen kann.

In der DE 30 14 693 C2 ist ausgeführt, daß gute Fördereigenschaften einer Förderwendel nach dem Prinzip einer Förderschnecke nur dann vorliegen, wenn zwischen dem in der Abfuhrnut befindlichen Bohrklein und der Wandung des Bohrlochs ein größerer Reibungswiderstand als zwischen dem Bohrklein und der Oberfläche der Abfuhrnut besteht. Hierfür sei es erforderlich, daß das Nutenvolumen der Bohrmehlnut stets an die anfallende Menge an Bohrmehl angepaßt ist, um diese Reibungsverhältnisse zu schaffen. Dies ist jedoch aufgrund der unterschiedlich anfallenden Menge an Bohrmehl aufgrund unterschiedlicher Bohrbedingungen nicht möglich. Dieser Stand der Technik schlägt deshalb vor, die Bohrmehlnut abschnittsweise in Richtung Einspannende zu vergrößern.

Aus der DE 43 38 667 A1 ist ein Gesteinsbohrer bekannt geworden, bei welchem eine Verminderung der Wandreibung dadurch erzeugt wird, daß die Rückenflächen der spiralförmigen Stege darin eingebrachte Nuten aufweisen. Diese Nebennuten bewirken in erster Linie eine Reduzierung der Fläche der Rückenstege und vermindern damit die Reibung. In gewissem Umfang können sie auch zur Abfuhr von Bohrgut dienen, was jedoch lediglich ein Nebeneffekt darstellt.

FR-A-1.595.690 beschreibt ein Bohrwerkzeug mit allen im Oberbegriff des Anspruchs 1 enthaltenen Merkmalen.

Der Erfindung liegt die Aufgabe zugrunde, ein Bohrwerkzeug zu schaffen, welches gegenüber herkömmlichen Bohrwerkzeugen verbesserte Fördereigenschaften für das Bohrgut aufweist, bei einer Verminderung der Wandreibung. Dabei sollen möglichst einfache und damit kostengünstige konstruktive Maßnahmen den gewünschten Erfolg herbeiführen.

Diese Aufgabe wird ausgehend von einem Bohrwerkzeug nach dem Oberbegriff des Anspruchs 1 durch die kennzeichnenden Merkmale des Anspruchs 1 gelöst.

In den Unteransprüchen sind vorteilhafte und zweckmäßige Weiterbildungen des Gesteinsbohrwerkzeugs nach Anspruch 1 angegeben.

Der Erfindung liegt die Erkenntnis zugrunde, daß gute Fördereigenschaften des Bohrmehls in Bohrmehlnuten nicht zuletzt auch durch die Größe der zur Verfügung stehenden Bohrmehl-Tragflächen bestimmt wird. Diese Größe wird durch die Anzahl der vorhandenen Abfuhrnuten mit jeweils einem zugehörigen Steg mit Tragfläche bestimmt. Eine ausreichende Anzahl oder Menge von Bohrmehl-Tragflächen werden durch die im wesentlichen senkrecht zur Bohrlängsachse angeordneten Flanken von wendelförmig verlaufenden Stegen gebildet. Die erfindungsgemäße Ausbildung des Bohrwerkzeugs sieht vor, daß außer den üblicherweise vorgesehenen Hauptstegen mit entsprechenden Tragflächen, Förderkanten oder Förderflanken zusätzlich sogenannte Nebenförderelemente wie Nebenstege oder Nebenflanken vorgesehen sind, die ihrerseits zusätzliche Bohrmehltragflächen bilden. Dabei können die Nebenstege ähnlich wie die Hauptstege ausgebildet sein. Ihr Außendurchmesser ist jedoch grundsätzlich kleiner als der Außendurchmesser der Förderwendel, so daß die Reibungsverluste bei verbesserten Fördereigenschaften reduziert werden. Es können auch Kernausbuchtungen zur Bildung von zusätzlichen Tragflächen oder Förderkanten für Bohrmehl vorgesehen sein.

Durch erfindungsgemäße Maßnahmen kann die Abfuhrnut als sogenannte Doppelnut oder Mehrfachnut gebildet werden, so daß vorzugsweise innerhalb einer Abfuhrnut mehrere Einzelnuten mit zugehörigen Tragflächen für Bohrmehl vorhanden sind.

Ausgehend von dieser Grunderkenntnis ergeben sich eine Vielzahl von Gestaltungsmöglichkeiten zur Verwirklichung dieser Grundidee. Diese Gestaltungsmöglichkeiten beinhalten eine Variation der Art der Anordnung der Nebenstege und/oder der Nebentragflächen in Form von Nebenförderkanten. Variiert werden kann auch die Anzahl solcher Nebenförderelemente, wodurch nicht zuletzt auch die Aufteilung der Abfuhrnut in gleich große oder unterschiedlich große Teil-Abfuhrnuten folgt, mit gleich großen oder unterschiedlich großen Nutentiefen.

Verschiedene Ausführungsbeispiele des erfindungsgemäßen Grundgedankens sind in der Zeichnung dargestellt und in der nachfolgenden Beschreibung näher erläutert.

Es zeigen
- Fig. 1: ein erfindungsgemäßes Bohrwerkzeug in Gesamtdarstellung,
- Fig. 2-13: verschiedene Ausführungsvarianten des Bohrwerkzeugs nach Fig. 1.

### Beschreibung der Ausführungsbeispiele:

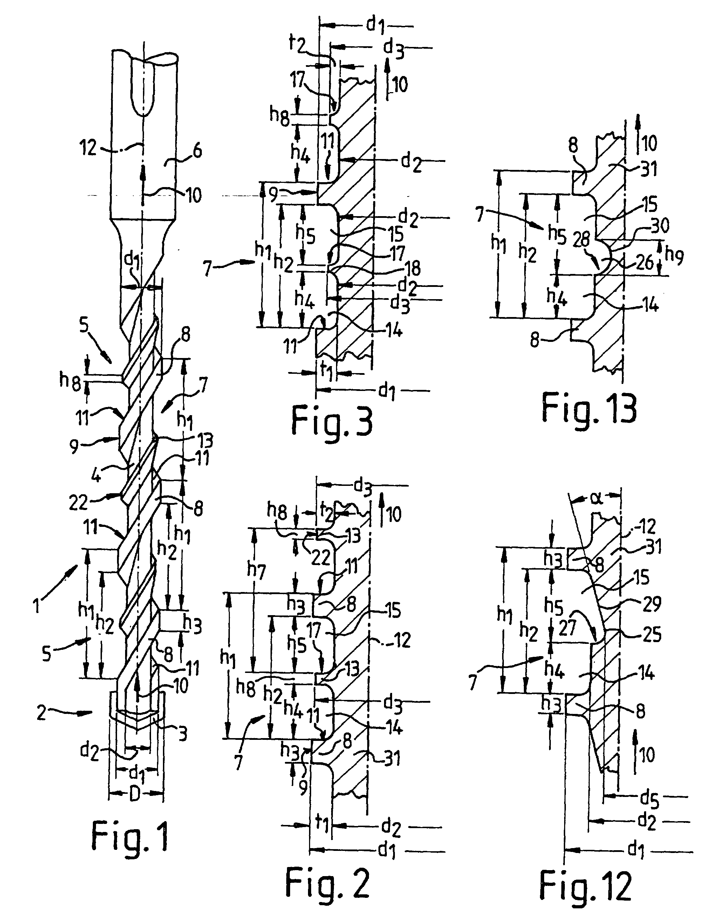

Das in Fig. 1 dargestellte Ausführungsbeispiel stellt ein erstes Grundprinzip der Erfindung dar. Hier wird das Prinzip der Bildung von Haupt- und Nebenstegen dadurch bewirkt, daß innerhalb einer bestehenden Abfuhrnut 7 einzelne Abfuhrnut-Abschnitte gebildet werden, die für sich gesehen zusätzliche Bohrmehltragflächen bilden. Eine Variante dieses Grundprinzips ist in den Fig. 2 bis 13 jeweils dargestellt.

Das in Fig. 1 dargestellte Gesteinsbohrwerkzeug 1 besteht aus einem Bohrerkopf 2, vorzugsweise mit stirnseitig vorgesehener Hartmetall-Schneidplatte 3, einem Wendelschaft 4 mit spiralförmiger Förderwendel 5 und einem sich anschließenden Einspannschaft 6 zum Einsetzen in eine Antriebsmaschine.

Beim Ausführungsbeispiel nach Fig. 1 ist die spiralförmige Förderwendel eingängig mit der Steigungshöhe (h₁) ausgebildet, wodurch sich eine umlaufende wendelförmige Abfuhrnut 7 mit der Nutenhohe h₂ ergibt, die beidseitig von einem ebenfalls wendelförmig verlaufenden Steg 8 begrenzt ist. Die Steghöhe h₃ bildet den äußeren Umfang oder die Rückenfläche 9 des Stegs 8. Die Rückenfläche 9 weist den Förderwendeldurchmesser d₁ auf. Der Nenndurchmesser des Bohrwerkzeugs wird gebildet durch den Durchmesser D der Hartmetall-Schneidplatte 3. Der Kerndurchmesser des Bohrerkerns 31 der Förderwendel ist mit d₂ bezeichnet.

Das durch die Bohrmehlnut oder Abfuhrnut 7 geförderte Bohrmehl oder Bohrklein stützt sich auf der in Förderrichtung 10 weisenden Tragfläche 11 ab, die einen etwa rechtwinkligen Verlauf zur Bohrerlängsachse 12 aufweist.

Gemäß der Darstellung nach Fig. 1 sowie der vergrößerten Darstellung in Fig. 2 befindet sich innerhalb der Abfuhrnut 7 ein sogenannter Nebensteg 13. Dieser Nebensteg 13 stellt grundsätzlich eine verkleinerte Ausführungsform des Hauptstegs 8 dar. Er kann jedoch auch geometrisch variieren. Die Abfuhrnut 7 mit der Höhe h₂ wird durch einen Nebensteg 13 in einen unteren Nutenabschnitt 14 mit der Höhe h₄ und einem oberen Nutenabschnitt 15 mit der Höhe h₅ aufgeteilt. Die Steghöhe des Nebenstegs 13 ist mit h₈ bezeichnet. Die äußere Rückenfläche des Nebenstegs 13 ist mit Bezugszeichen 22 bezeichnet. Der Außendurchmesser der äußeren Rückenfläche 22 ist mit d₃ angegeben.

Durch den zusätzlichen Nebensteg 13 zum Hauptsteg 8 entsteht eine zusätzliche Tragfläche 17, die ebenfalls etwa rechtwinklig zur Bohrerlängsachse 10 verläuft.

Der Außendurchmesser d₃ der Nebenstege ist im Ausführungsbeispiel nach Fig. 1 und 2 nur geringfügig kleiner bemessen als der Außendurchmesser d₁ der Förderwendel 7. Hierdurch bildet die Abfuhrnut 7 eine Art Doppelnut mit den Nutabschnitten 14, 15 und der Haupttragfläche 11 sowie der Nebentragfläche 17 für das Bohrmehl. Der Nebensteg 13 verläuft demnach ebenfalls als spiralförmige Nebenförderwendel mit der Steigungshöhe h₇ innerhalb der Abfuhrnut 7.

Gemäß dem Ausführungsbeispiel nach Fig. 1 und 2 sind der untere Nutenabschnitt 14 und der obere Nutenabschnitt 15 mit ihrer Höhe h₄ und h₅ etwa in gleicher Größe ausgebildet. Gleiches gilt für das Ausführungsbeispiel nach Fig. 3. Hier sind gleiche Teile mit gleichen Bezugszeichen versehen. In Fig. 3 ist jedoch der Außendurchmesser d₃ des dortigen Nebenstegs 18 deutlich kleiner bemessen, so daß sich nur eine kleinere Tragfläche 17 für das zu transportierende Bohrmehl ergibt. Die Nutenaufteilung der Nutenabschnitte 14, 15 ist in Fig. 3, ebenso wie in Fig. 2, symmetrisch vorgenommen, d. h. h₄ ≈ h5. Das Durchmesserverhältnis d₃ zu d₁ liegt bei den Ausführungsbeispielen nach Fig. 2 und 3 im Bereich von etwa 0,7 bis 0,95, um eine ausreichende Nebentragfläche 17 zu bilden. Es kann in Sonderfällen auch zweckmäßig sein, hier gleiche Außendurchmesser zu wählen.

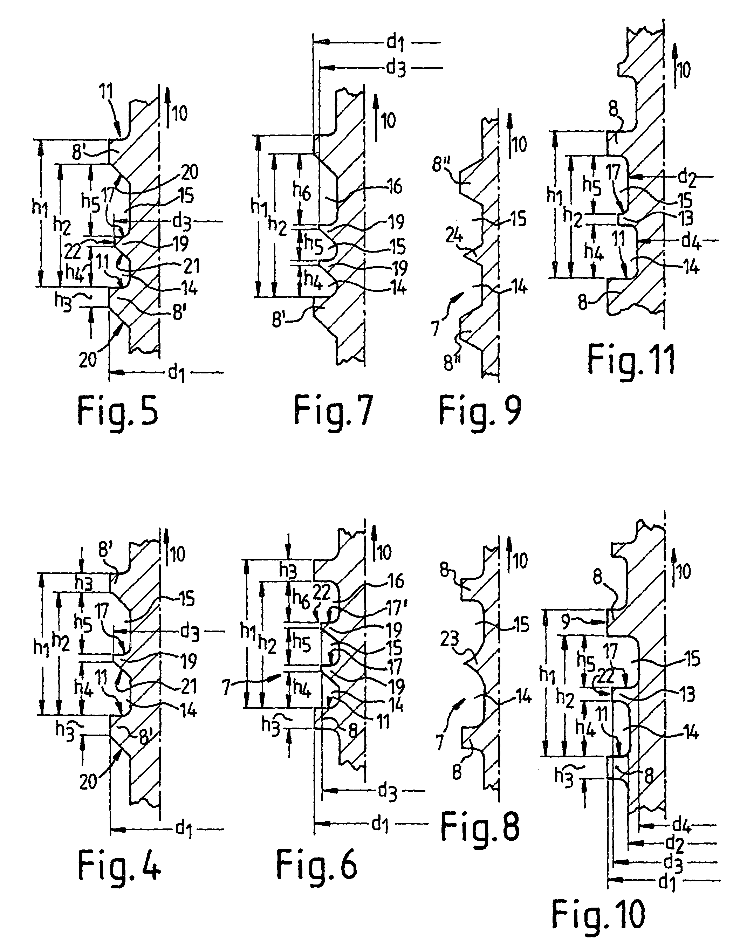

In den Fig. 5 bis 11 sind weitere Varianten der Ausführungsform nach den beschriebenen Fig. 2 und 3 angegeben. Gleiche Teile sind mit gleichen Bezugszeichen versehen.

Unterschiedlich zum Ausführungsbeispiel nach Fig. 2 sind in Fig. 4 und 5 sowohl der Hauptsteg 8' als auch der Nebensteg 19 in einer Art Sägezahnform ausgebildet, d. h. der der jeweiligen Tragfläche 11, 17 gegenüberliegende Bereich des jeweiligen Stegs ist als abgeschrägte Fläche 20 für den Hauptsteg 8' und als abgeschrägte Fläche 21 für den Nebensteg 19 ausgebildet.

In Fig. 4 sind die Abfuhrnutenabschnitte 14, 15 wiederum symmetrisch ausgebildet, d. h. h₄ ≈ h₅. In Fig. 5 liegt eine asymmetrische Anordnung für die Nutenaufteilung vor. Hier ist h₄ < h₅, d. h. der Abfuhrnutabschnitt 14 ist kleiner als der Abfuhrnutabschnitt 15. Die Durchmesser d₃ der äußeren Rückenflächen 22 der Nebenstege 19 können analog zur Darstellung nach den Fig. 2 und 3 ausgebildet sein. In der Darstellung nach Fig. 4 und 5 sind die Durchmesser d₃ gleich ausgebildet.

Eine weitere Variante der Erfindung ist in den Fig. 6 und 7 dargestellt. Hier ist die Abfuhrnut 7 in drei Teilabschnitte 14, 15, 16 aufgeteilt, mit den Höhen h₄, h₅ und h₆ der jeweiligen Abfuhrnut-Abschnitten. Der Hauptsteg 8 ist analog zur Ausführungsform nach Fig. 2 und 3 im wesentlichen rechtwinklig, die Nebenstege 19 analog zu den Ausführungsbeispielen nach Fig. 4 und 5 nach Art einer Sägezahnform ausgebildet.

Die Ausführungsvariante nach Fig. 7 unterscheidet sich von der nach Fig. 6 dadurch, daß wiederum eine asymmetrische Aufteilung der Nutenabschnitte 14, 15, 16 vorgenommen wird, wobei der untere 14 und der mittlere Nutenabschnitt 15 etwa eine gleiche Höhe h₄ ≈ h₅ aufweisen, während die Nutenhöhe h₆ des oberen Nutenabschnitts 16 etwa doppelt so groß ist wie die Höhen h₄, h₅.

Ähnlich wie in den Fig. 4 und 5 sind auch in Fig. 7 die Stege 8', 9 nach Art einer Sägezahnform ausgebildet.

In den Fig. 6 und 7 sind die Außendurchmesser d₃ der äußeren Rückenflächen 22 in einem Abmessungsbereich zum Förderwendeldurchmesser d₁, wie dies zu Fig. 2 und 3 beschrieben ist.

Das Ausführungsbeispiel der Erfindung nach Fig. 8 entspricht weitestgehend dem Ausführungsbeispiel nach Fig. 2, jedoch mit dem Unterschied, daß die Stegform des Nebenstegs 23 bogenförmig und spitz zulaufend ausgebildet ist, bei ansonsten symmetrischer Anordnung innerhalb der Abfuhrnut 7. Der Hauptsteg 8 ist wiederum rechteckförmig ausgebildet, wie dies zu Fig. 2 und 3 beschrieben ist.

Das Ausführungsbeispiel nach Fig. 9 zeigt einen dreieckförmigen Nebensteg 24, der wiederum symmetrisch in der Abfuhrnut 7 angeordnet ist. Die Hauptstege 8'' sind im Querschnitt trapezförmig ausgebildet. Im übrigen liegt eine symmetrische Anordnung der Abfuhrnut-Abschnitte 14, 15 innerhalb der Abfuhrnut 7 vor.

Bei der Darstellung der Ausführungsbeispiele nach den Fig. 2 bis 9 sind die Kerndurchmesser aller Abfuhrnut-Abschnitte etwa gleich ausgebildet. Dieser Kerndurchmesser ist mit d₂ bezeichnet.

Demgegenüber zeigen die Ausführungsbeispiele nach Fig. 10 und 11 Nutenabschnitte 14, 15 mit unterschiedlichem Kerndurchmesser als Ausführungsvarianten.

In Fig. 10 ist der untere Nutenabschnitt 14 mit einem Kerndurchmesser d₂, der obere Nutenabschnitt 15 mit einem Kerndurchmesser d₄ ausgebildet, wobei d₄ < d₂ ist. Durch eine Verkleinerung des Kerndurchmessers im oberen Nutenabschnitt 15 kann das Nutenvolumen zur Aufnahme von Bohrmehl noch weitere vergrößert werden. Auch die Nebentragfläche 17 des Nebenstegs 13 vergrößert sich damit. Hierdurch kann der verkleinerte Außendurchmesser d₃ (d₃ < d₁) kompensiert werden.

Der umgekehrte Fall liegt im Ausführungsbeispiel nach Fig. 11 vor. Hier ist der untere Nutenabschnitt 14 mit einem kleineren Kerndurchmesser d₄ ausgestattet, während der obere Nutenabschnitt 15 den normalen Kerndurchmesser d₂ aufweist.

Die Ausführungsbeispiele nach den Fig. 2 bis 11 zeigen auf, daß sich eine Vielzahl von Variationsmöglichkeiten ergeben, um innerhalb einer Abfuhrnut 7 einer ein- oder mehrgängigen Förderwendel Nutenabschnitte herzustellen, indem ein Nebensteg 13, 18, 19 zum Hauptsteg 8, 8', 8" gebildet wird. Die geometrische Ausbildung dieser Nebenstege kann in verschiedenen Variationen erfolgen. Auch die Symmetrie oder Asymmetrie der verschiedenen Nutenabschnitte innerhalb der Abfuhrnut 7 kann die Eigenschaften der Abfuhrnut beeinflussen. Schließlich können verschiedene Kerndurchmesser der Nutenabschnitte zu verschieden großen Nutenvolumen führen.

Eine weitere Variation der Erfindung wird durch die Ausführungsbeispiele nach Fig. 12 und 13 herbeigeführt. Hier wird anstelle eines oder mehrerer zusätzlichen Nebenstege zum Hauptsteg 8 sozusagen negative Stege durch Ausbuchtungen 25, 26 gebildet. Hierfür wird der Kernquerschnitt der Förderwendel durch eine entsprechende Ausbuchtung geschwächt, die dann zur entsprechenden Tragflächen 27, 28 führen.

Beim Ausführungsbeispiel nach Fig. 12 wird demzufolge eine nasenförmige Aussparung 29 in den Förderwendelkern eingebracht, was zu einer maximalen Verringerung des Kernquerschnitts auf den Durchmesser d₅ führt. Die so ausgeführte Abschrägung weist gegenüber der Bohrerlängsachse 12 einen Winkel α ≈ 15° auf.

Durch die so gebildete zusätzliche Tragfläche 27 wird die Abfuhrnut 7 in einen unteren Nutenabschnitt 14 mit der Höhe h₄ und einen oberen Nutenabschnitt 15 mit der Höhe h₅ geteilt, wobei h₄ ≤ h₅ ist.

Die in Fig. 12 dargestellte nasenförmige Aussparung 29 mit der Tragfläche 27 wird beim Ausführungsbeispiel nach Fig. 13 durch eine halbkreisförmige Aussparung 30 ersetzt, mit einer Höhe h₉. Die halbkreisförmige Aussparung 30 bildet wiederum eine zusätzliche Tragfläche 28 für Bohrmehl. Hierdurch wird die Abfuhrnut 7 auch beim Ausführungsbeispiel nach Fig. 13 in einen unteren Nutenabschnitt 14 und einen oberen Nutenabschnitt 15 aufgeteilt.

In allen Figuren ist mit Pfeil 10 die Transportrichtung des Bohrmehls innerhalb der Bohrmehlnuten angegeben, die in Richtung Einspannende 6 zeigt.

Die vorliegende Erfindung kann auch dadurch verwirklicht werden, daß anstelle von Abfuhrnut-Abschnitten innerhalb einer bestehenden Abfuhrnut mehrere spiralförmige Abfuhrnuten vorgesehen sind, die jedoch mit unterschiedlichen Außendurchmessern der jeweiligen, die Abfuhrnuten begrenzenden Stege versehen sind. Beispielsweise kann bei einer 2-spiraligen oder 4-spiraligen Förderwendel jeder zweite Steg in seinem Außendurchmesser kleiner ausgeführt werden, so daß hierdurch eine verminderte Wandreibung durch die verkleinerten Außendurchmesser entsteht. Diese Variation des Außendurchmessers der Stege kann in symmetrischer oder asymmetrischer Reihenfolge über die Länge der Förderwendel stattfinden. Sie kann auch beliebig an einem Steg selbst durchgeführt werden, d. h. ein Steg kann z. B. über einen Drehwinkel von n x 360° (mit n = 1, 2, 3) abwechselnd einen größeren oder einen kleineren Außendurchmesser aufweisen. Hierdurch wird die Wandreibung stets vermindert, bei nahezu gleichbleibenden Fördereigenschaften der Förderwendel.

Die Erfindung ist nicht auf die dargestellten und beschriebenen Ausführungsbeispiele beschränkt. Sie umfaßt auch vielmehr alle weiteren fachmännischen Abwandlungen im Rahmen der Schutzrechtsansprüche.
- 1: Gesteinsbohrwerkzeug
- 2: Bohrerkopf
- 3: Hartmetall-Schneidplatte
- 4: Wendelschaft
- 5: spiralförmige Förderwendel
- 6: Einspannschaft
- 7: Abfuhrnut
- 8: Steg (Haupt-)
- 9: äußerer Umfang (Rückenfläche)
- 10: Förderrichtung
- 11: Tragfläche (Haupt-)
- 12: Bohrerlängsachse
- 13: Nebensteg
- 14: unterer Nutenabschnitt
- 15: oberer Nutenabschnitt
- 16: Nutenabschnitt
- 17: Tragfläche (Neben-)
- 18: Nebensteg
- 19: Nebensteg
- 20: abgeschrägte Fläche
- 21: abgeschräfte Fläche
- 22: äußere Rückenfläche
- 23: Nebensteg
- 24: Nebensteg
- 25: Ausbuchtung
- 26: Ausbuchtung
- 27: Tragfläche
- 28: Tragfläche
- 29: nasenförmige Aussparung
- 30: halbkreisförmige Aussparung
- 31: Bohrerkern

- h₁: Steigungshöhe der Hauptförderwendel
- h₂: Nutenhöhe
- h₃: Steghöhe von 8
- h₄: unterer Nutenabschnitt
- h₅: oberer mittlerer Nutenabschnitt
- h₆: oberer Nutenabschnitt
- h₇: Steigungshöhe der Nebenförderwendel
- h₈: Steghöhe von 13
- h₉: Höhe der Ausbuchtung 30
- d₁: Förderwendeldurchmesser
- D: Nenndurchmesser
- d₂: Kerndurchmesser
- d₃: Außendurchmesser der Nebenförderwendel
- d₄: Kerndurchmesser
- d₅: Kerndurchmesser
- t₁: Nutentiefe (d₁-d₂)
- t₂: Nutentiefe (d₃-d₂)

## Patentansprüche

1. Bohrwerkzeug, insbesondere Gesteinsbohrwerkzeug für drehende und/oder schlagende Beanspruchung, mit einem Bohrerkopf (2), einer sich hieran anschließenden, ein- oder mehrgängigen, spiralförmigen Förderwendel (5) mit wenigstens einer Abfuhrnut (7) für Bohrmehl und einem Einspannschaft (6), wobei die Abfuhrnut (7) der Förderwendel (5) von spiralförmig verlaufenden Hauptstegen (8) mit gleichem Außendurchmesser (d₁) begrenzt ist, wobei eine Bohrmehltragfläche (11) vorgesehen ist, die einen etwa rechtwinkligen Verlauf zur Bohrlängsachse aufweist, **dadurch gekennzeichnet, daß** innerhalb der Abfuhrnut (7) wenigsten ein spiralförmig umlaufender Nebensteg (13, 18, 19, 23, 24) als Nebenförderwendel (18, 19) zur Bildung von wenigstens zwei Abfuhrnut-Abschnitten (14, 15, 16) vorgesehen ist und daß zur Bildung von Bohrmehltragflächen die Tragflächen (11, 17) der Hauptstege (8, 8') und/oder der Nebenstege(13, 18, 19) einen etwa rechtwinkligen Verlauf zur Bohrerlängsachse (12) und die Hauptstege (8) und Nebenstege (13, 18, 19, 23, 24) unterschiedlichen Außendurchmesser (d₁, d₃) aufweisen.

2. Bohrwerkzeug nach Anspruch 1, **dadurch gekennzeichnet, daß** die Abfuhrnut (7) begrenzenden Stege (8, 13, 18, 19, 23, 24) wenigstens über einen Teil der Förderwendellänge und/oder über einen Teil oder Bereiche des Förderwendelumlaufs unterschiedliche Rückenstegbreiten (h₃, h₈) aufweisen.

3. Bohrwerkzeug nach Anspruch 1 oder 2, **dadurch gekennzeichnet, daß** eine zwei- oder vierspiralige Förderwendel (5) vorgesehen ist, wobei die die jeweilige Abfuhrnut (7) begrenzenden Stege jeweils abwechselnd unterschiedliche Außendurchmesser (d₁, d₂) und/oder unterschiedliche Rückenstegbreiten (h₃, h₈) aufweisen.

4. Bohrwerkzeug nach einem der Ansprüche 1 bis 3, **dadurch gekennzeichnet, daß** jeder Abfuhrnut-Abschnitt (14, 15, 16) eine Bohrmehl-Tragfläche (11, 17, 17', 27, 28) aufweist.

5. Bohrwerkzeug nach Ansprüche 1 bis 4, **dadurch gekennzeichnet, daß** die Abfuhrnut (7) von zwei Hauptstegen (8) begrenzt ist und sich zwischen den Hauptstegen (8) wenigstens eine zusätzliche Bohrmehl-Tragfläche (17, 27, 28) in Form wenigstens eines Nebenstegs (13, 18, 19, 23, 24) befindet.

6. Bohrwerkzeug nach Anspruch 1 oder 2, **dadurch gekennzeichnet, daß** der äußere Durchmesser (d₃) der Nebenstege (13, 18, 19, 23, 24) gegenüber dem Durchmesser (d₁) der Hauptstege (8, 8') zurückversetzt ist, wobei vorzugsweise der Außendurchmesser (d₃) der Nebenstege (13, 18, 19, 23, 24) etwa 70 bis 95 % des Außendurchmessers (d₁) der Hauptstege (8, 8') beträgt.

7. Bohrwerkzeug nach einem der Ansprüche 1 bis 6, **dadurch gekennzeichnet, daß** die Rückenbreite (h₈) der Nebenstege (13, 18, 19, 23, 24) kleiner ist als die Rückenbreite (h₃) der Hauptstege (8, 8').

8. Bohrwerkzeug nach einem der Ansprüche 1 bis 7, **dadurch gekennzeichnet, daß** die Tragflächen (11) der Hauptstege (8, 8') und/oder der Nebenstege (13, 18, 19, 23, 24) einen ebenen, bauchigen oder taschenförmigen Verlauf aufweisen.

9. Bohrwerkzeug nach einem der vorgenannten Ansprüche, **dadurch gekennzeichnet, daß** die Querschnitte (11) der Hauptstege (8, 8') und/oder der Nebenstege (13, 18, 19, 23, 24) rechteckförmig, trapezförmig, halbtrapezförmig, dreieckförmig, halbkreisförmig und/oder spitz, flach oder rund zulaufend ausgebildet sind.

10. Bohrwerkzeug nach einem der vorgenannten Ansprüche, **dadurch gekennzeichnet, daß** die Nutentiefen (t₁, t₂) der Abfuhrnut-Abschnitte (14, 15, 16) gleich groß oder unterschiedlich ausgebildet sind, wobei wahlweise ein in Förderrichtung liegender Abfuhrnut-Abschnitt oder ein zur Bohrerspitze hinweisender Abfuhrnut-Abschnitt eine größere Nutentiefe (t₁, t₂) aufweist.

11. Bohrwerkzeug nach einem oder mehreren der vorhergehenden Ansprüchen, **dadurch gekennzeichnet, daß** ein oder mehrere Stege einer ein- oder mehrspiralige Förderwendel im Bereich des spiralförmigen Umlaufs unterschiedliche Außendurchmesser und/oder unterschiedliche Rückenstegbreiten (h₃, h₈) aufweist.

## Claims

1. Drilling tool, in particular rock drilling tool for rotary and/or percussive stress, comprising a drilling head (2), a single- or multiple-threaded helicoidal conveying spiral (5) adjoining the latter and with at least one discharge groove (7) for bore dust and a fixing shank (6), the discharge groove (7) of the conveying spiral (5) being limited by helicoidally extending main webs (8) with identical external diameter (d₁), a bore dust carrying face (11) being provided which comprises a substantially right angular course to the longitudinal axis of the drill, **characterised in that** at least one helicoidally rotating ancillary web (13, 18, 19, 23, 24) is provided inside the discharge groove (7) as ancillary conveying spiral (18, 19) to form at least two discharge groove sections (14, 15, 16), and **in that** to form bore dust carrying faces the carrying faces (11, 17) of the main webs (8, 8') and/or of the ancillary webs (13, 18, 19) have a substantially right angular course to the longitudinal axis of the drill (12) and the main webs (8) and ancillary webs (13, 18, 19, 23, 24) have different external diameters (d₁, d₃).

2. Drilling tool according to claim 1, **characterised in that** the discharge groove (7) comprises limiting webs (8, 13, 18, 19, 23, 24) at least over a portion of the conveying spiral length and/or comprises different back web widths (h₃, h₈) over. a portion or regions of the conveying spiral rotation.

3. Drilling tool according to claim 1 or 2, **characterised in that** a two- or four-spiralled conveying spiral (5) is provided, the webs limiting the respective discharge groove (7) each alternately comprising different external diameters (d₁, d₂) and/or different back web widths (h₃, h₈).

4. Drilling tool according to any of claims 1 to 3, **characterised in that** each discharge groove section (14, 15, 16) comprises a bore dust carrying face (11, 17, 17', 27, 28).

5. Drilling tool according to claims 1 to 4, **characterised in that** the discharge groove (7) is limited by two main webs (8) and at least one additional bore dust carrying face (17, 27, 28) in the form of at least one ancillary web (13, 18, 19, 23, 24) is located between the main webs (8).

6. Drilling tool according to claim 1 or 2, **characterised in that** the external diameter (d₃) of the ancillary webs (13, 18, 19, 23, 24) is set back compared with the diameter (d₁) of the main webs (8, 8'), the external diameter (d₃) of the ancillary webs (13, 18, 19, 23, 24) substantially being 70 to 95% of the external diameter (d₁) of the main webs (8, 8').

7. Drilling tool according to any of claims 1 to 6, **characterised in that** the back width (h₈) of the ancillary webs (13, 18, 19, 23, 24) is smaller than the back width (h₃) of the main webs (8, 8').

8. Drilling tool according to any of claims 1 to 7, **characterised in that** the carrying faces (11) of the main webs (8, 8') and/or of the ancillary webs (13, 18, 19, 23, 24) have a plane, bulging or pocket-like course.

9. Drilling tool according to any of the preceding claims, **characterised in that** the cross-sections (11) of the main webs (8, 8') and/or of the ancillary webs (13, 18, 19, 23, 24) are rectangular, trapezoidal, semi-trapezoidal, triangular, semicircular and/or are tapered, flat or round in design.

10. Drilling tool according to any of the preceding claims, **characterised in that** the groove depths (t₁, t₂) of the discharge groove sections (14, 15, 16) are identical or different in size, a discharge groove section located in the conveying direction or a discharge groove section pointing toward the bit selectively having a larger groove depth (t₁, t₂).

11. Drilling tool according to any one or more of the preceding claims, **characterised in that** one or more webs of a single- or multiple-spiralled conveying spiral has/have different external diameters and/or different back web widths (h₃, h₈) in the region of the helicoidal rotation.

## Revendications

1. Outil de perçage notamment outil de perforation de roche pour travailler en rotation et/ou en percussion comportant une tête de perçage (2) suivie d'une hélice de transfert (5) en forme de spirale, à un ou plusieurs filets, au moins une rainure d'évacuation (7) pour la farine de perçage et un emmanchement (6),
la rainure d'évacuation (7) de l'hélice de transfert (5) étant délimitée par un filet principal (8) en spirale de même diamètre extérieur (d₁), avec une surface portante (11) pour la farine de perçage, cette surface ayant un tracé sensiblement perpendiculaire à l'axe longitudinal du foret,
**caractérisé en ce que**
dans la rainure d'évacuation (7) il est prévu au moins un filet auxiliaire (13, 18, 19, 23, 24) en forme de spirale comme hélice de transfert auxiliaire (18, 19) pour former au moins deux segments de rainure d'évacuation (14, 15, 16) et pour former les surfaces de transfert de la farine de perçage, les surfaces de transfert (11, 17) du filet principal (8, 8') et/ou des filets auxiliaires (13, 18, 19) ont un tracé sensiblement perpendiculaire à l'axe longitudinal (12) du foret et le filet principal (8) et les filets auxiliaires (13, 18, 19, 23, 24) ont un diamètre extérieur différent (d₁, d₃).

2. Outil de perçage selon la revendication 1,
**caractérisé en ce que**
les filets (8, 13, 18, 19, 23, 24) délimitant la rainure d'évacuation (7) ont sur au moins une partie de la longueur de leur hélice de transfert et/ou sur une partie ou zone de la périphérie de l'hélice de transfert, des largeurs de dos (h₃, h₈) différentes.

3. Outil de perçage selon la revendication 1 ou 2,
**caractérisé par**
une hélice de transfert (5) à deux ou quatre spirales, dont les filets qui délimitent la rainure d'évacuation (7) respective, ont chaque fois un diamètre extérieur (d₁, d₂) différent et/ou des largeurs de dos différentes (h₃, h₈).

4. Outil de perçage selon l'une des revendications 1 à 3,
**caractérisé en ce que**
chaque segment de rainure d'évacuation (14, 15, 16) comporte une surface de support pour la farine de perçage (11, 17, 17', 27, 28).

5. Outil de perçage selon l'une des revendications 1 à 4,
**caractérisé en ce que**
la rainure d'évacuation (7) est délimitée par deux filets principaux (8) et entre les filets principaux (8) on a au moins une surface de support de farine de perçage supplémentaire (17, 27, 28) sous la forme d'au moins un filet auxiliaire (13, 18, 19, 23, 24).

6. Outil de perçage selon la revendication 1 ou 2,
**caractérisé en ce que**
le diamètre extérieur (d₃) des filets auxiliaires (13, 18, 19, 23, 24) est en retrait par rapport au diamètre (d₁) du filet principal (8, 8'), et de préférence le diamètre extérieur (d₃) des filets auxiliaires (13, 18, 19, 23, 24) représente environ entre environ 70 et 95 % du diamètre extérieur (d₁) du filet principal (8, 8').

7. Outil de perçage selon la revendication 1 à 6,
**caractérisé en ce que**
la largeur du dos (h₈) du filet auxiliaire (13, 18, 19, 23, 24) est inférieure à la largeur (h₃) du dos du filet principal (8, 8').

8. Outil de perçage selon la revendication 1 à 7,
**caractérisé en ce que**
la surface de support (11) du filet principal (8, 8') et/ou du filet auxiliaire (13, 18, 19, 23, 24) a un tracé plat, bombé ou en creux.

9. Outil de perçage selon l'une quelconque des revendications précédentes,
**caractérisé en ce que**
la section (11) du filet principal (8, 8') et/ou les filets auxiliaires (13, 18, 19, 23, 24) est rectangulaire, trapézoïdale, semi-trapézoïdale, triangulaire, semi-circulaire et/ou en pointe, plate ou ronde.

10. Outil de perçage selon l'une quelconque des revendications précédentes,
**caractérisé en ce que**
la profondeur de rainure (t₁, t₂) des segments de rainure d'évacuation (14, 15, 16) est égale ou différente et au choix un segment de rainure d'évacuation situé dans la direction de transfert ou un segment de rainure d'évacuation dirigé vers la pointe du foret a une profondeur de rainure (t₁, t₂) plus grande.

11. Outil de perçage selon une ou plusieurs des revendications précédentes,
**caractérisé en ce que**
un ou plusieurs filets d'une hélice de transfert à un ou plusieurs filets au niveau du contour en spirale présente un diamètre extérieur différent et/ou une largeur de dos différente (h₃, h₈).
